# EUROPEAN PATENT APPLICATION

(11) **EP 1 860 923 A1**
(43) Date of publication of application: **28.11.2007**
(21) Application number: 06010469.2
(22) Date of filing: 22.05.2006
(51) Int. Cl.: H05B 33/12

(54) **Electroluminescent element**

(71) Applicant: TETENAL AG & Co. KG., 22844 Norderstedt (DE)
(72) Inventor: De Rossi, Umberto, Dr., 22844 Norderstedt (DE)
(74) Representative: Becker Kurig Straus

(57) **Abstract**

The present invention pertains to the field of electroluminescent displays. In particular, the present invention provides a ready to use electroluminescent element comprising all required constituents in that it may be finished by printing an image thereon and subsequently connecting to an electric source to illuminate the printed image. The present invention provides also an improved method for the preparation of the ready to use electroluminescent element using common accessible devices, such as ink jet printers, and thereby facilitating the production of electroluminescent displays by laymen customers and reducing costs.

## Description

The present invention pertains to the field of electroluminescent displays. In particular, the present invention provides a ready to use electroluminescent element comprising all required constituents in that it may be finished by printing an image thereon and subsequently connecting to an electric source to illuminate the printed image. The present invention provides also an improved method for the preparation of the ready to use electroluminescent element using common accessible devices, such as ink jet printers, and thereby facilitating the production of electroluminescent displays by laymen customers and reducing costs.

Particular materials have electroluminescent (EL) properties. Such EL materials emit light in response to a strong electric field or to an electric current passed through. The first known electroluminescent materials were inorganic particulate substances such as ZnS, silicon, germanium or a semiconductor such as InP, GaAs, GaAlAs, GaP or GaN with suitable dopants. More recently-found electroluminescent materials include a number of small-molecule organic emitters known as organic LEDs (OLEDs) and some plastics- synthetic organic polymeric substances-known as light-emitting polymers (LEPs).

Inorganic particulates, in a doped and encapsulated form, are still in use, particularly when mixed into a binder and applied to a substrate surface as a relatively thick layer; LEPs can be used both as particulate materials in a binder matrix or, with some advantages, on their own as a relatively thin continuous film.

Such electroluminescent films are mainly composed of a stack of several layers between two transparent protective films, a layer formed from one or several front transparent electrodes, a dielectric layer, a layer comprising the electroluminescent material, a dielectric layer, a layer comprising one or several rear electrodes. The transparent electrode(s) are for example indium-tin oxide (ITO)-based electrodes. The electroluminescent layer is made from a semiconductive phosphor material, the metallic electrodes may be aluminium and the protective films are made from a transparent flexible material.

When a sufficient electrical voltage is applied between two electrodes located in the front and rear layers, the electroluminescent material becomes an emitting material and a visible image is formed, the outline of which corresponds to that of the rear electrodes. The colour of the emitted light depends on the phosphor material which is used. One active element is thus created per electrode. Several individually controlled elements may be combined in order to display information on a dashboard of a vehicle for example.

This electroluminescent effect has also been used in the construction of displays. In some types of these displays a large area of an electroluminescent material- generally referred to in this context as a phosphor- is provided to form a backlight which can be seen through a mask that defines whatever characters the display has to show. In other types there are instead provided individual small areas of EL material. These displays have many applications; examples thereof are a simple digital time and date display (to be used in a watch or clock), a mobile phone display, the control panel of a household device (such as a dishwasher or washing machine), and a hand-holdable remote controller (for a television, video or DVD player, a digibox, or a stereo or music centre). They are widely applied in making advertising sign boards, signal boards, ornamental panels for motor vehicles or buildings and the like because of its advantageous features of light weight and emitting light without heat.

A general electroluminescent panel comprises a front electrode layer, a luminescent layer, a reflective layer, and a back electrode layer. In order to manufacture an electroluminescent panel for displaying desired letters, signs or pattern, the front electrode layer, the luminescent layer and the reflective layer are sequentially formed by performing a screen-printing process. Next, a screen plate having the desired letters, sign or pattern is used to print the desired letters, sign or pattern is placed onto the reflective layer, and then the back electrode layer is printed onto the reflective layer.

Such an electroluminescent panel is disclosed e.g. in US 2005/212417 and US 2004/160180. The second disclosure relates for example to an electroluminescent panel comprising a front electrode layer; a luminescent layer, formed on the front electrode layer; a reflective layer, formed on the luminescent layer; a back electrode layer having at least a pattern or letters for being displayed by the electroluminescent panel; an insulating layer, adhered onto the back electrode layer. The insulating layer comprises a plurality of contact holes, and wherein the contact holes are disposed according to the pattern or letters of the back electrode layer.

In EP 1536471 an organic light emitting device for preventing element defects and improving picture quality by reducing a taper angle of a substrate surface is disclosed. The flat panel display of the present invention comprises an insulating substrate, a lower layer formed on the insulating substrate and having a first step and a first taper angle with respect to the substrate surface, and an upper layer formed on the insulating substrate and for reducing the taper angle of the lower layer. The upper layer has a second taper angle smaller than the first taper angle of the lower layer. The upper layer is a conductive layer that may be applied by a wet coating method, has a charge transporting capability, and is selected from at least one of a small-molecule organic layer.

Drawbacks of the above electroluminescent panels or displays reside, however, in the complexity in production, which still require that laymen users having not the appropriate equipment must address a specialised company about the composition of the desired electroluminescent display. If for example a particular design of electroluminescent panels is ordered, the manufacturer has to prepare a particular set of screen plates or layers and print them according to the customer's desire. This renders the aforementioned process cost intensive for mass production for customers requiring electroluminescent panels for various purposes such as displaying e.g. letters, signs or patterns, independent of the required quantity of displays.

It is therefore an object of the present invention to provide an electroluminescent element and a production method, for allowing a cost-saving and fast production of such elements.

An additional object of the present invention resides in the provision of an electroluminescent element, which may be easily finished to an electroluminescent display or panel by a laymen user.

The present inventors found that the above objective may be solved by the provision of an electroluminescent element and a respective production method, relying preliminary on the use of ink jet (IJ) printing technology using common available printing devices in combination with a prepared ready to use electroluminescent element already provided with electrical contacts, in that a user merely has to apply an image by means of conventional ink-jet printing and connecting the electrical contacts with an electrical source in order to obtain an electroluminescent display showing an illuminatable image. The electroluminescent element according to the present invention provides several layers. In particular, a commercial available substrate serves as a base. On a first side of the substrate first a layer comprising an electroluminescent material (the electroluminescent layer) is disposed.

Thereon, also a dielectric layer is disposed and a back electrode is provided with electrical contacts. The second side of the substrate represents an ink-reception layer ready for printing an image by means of a commercial ink jet printer thereon. The ink reception layer may be either the second side of the substrate itself or is alternatively an additional layer serving as ink reception layer, which additional layer may be applied directly on the second side of the substrate or optionally with a laminate layer in between. Particularly, the ink jet technology allows in this regard the provision of a screen/display comprising fewer parts, requiring shorter curing periods and enables finishing of electroluminescent displays without special equipment.

According to the present invention a ready to use electroluminescent element is provided, comprising several layers disposed on each other. Starting from a substrate, an electroluminescent layer is disposed on a first side of the substrate. Onto said electroluminescent layer in turn a dielectric layer is applied and a back electrode, above said dielectric layer, is provided with electrical contacts ready to connect to an electrical source. The second side of the substrate represents an ink-reception layer ready for printing an image by means of a commercial ink jet printer thereon. The ink used for the printing of the second side of the substrate may be for example a conventional water-based ink. Preparation, application and curing of such an ink represent techniques all well known to the person skilled in the art. The constituents of the electroluminescent element, such as its different layers, may be produced/applied completely or partially by means of conventional silkscreen techniques known to the skilled person.

It should be clear that the ink reception layer may be also a separated layer applied on said second side of the substrate. Between these layers optionally a laminate/laminating layer may be arranged.

The substrate to be used in the present element may be any device in a form allowing passage through a printing device. In principle, the material of the slide may be any suitable material known to the skilled person, preferably polyethylene (PE) or polypropylene (PP) and the substrate may have a thickness of from about 20 µm to about 250 µm. Preferably, the thickness is of from about 30 µm to about 200 µm, more preferably from about 50 µm to about 150 µm and still more preferably from about 75 µm to about 100 µm. Said substrate may be a slide having doted or not-doted indiumtinoxide (ITO) disposed thereon. The ITO-slide may be prepared according to any technique well known to the skilled person, such as vacuum deposition, sputtering or a sol-gel-technique.

The electroluminiscent layer disposed on one side (the first side) of the substrate comprises materials suitable for the preparation of electroluminescent layers, such as for example zinksulfide (ZnS), silicon, germanium or a semiconductor such as InP, GaAs, GaAlAs, GaP or GaN with suitable dopants, preferably zinksulfide. The thickness of this layer is generally in the range of from about 1 µm to about 30 µm. Preferably, the thickness is in the range of from about 5 µm to about 25 µm, more preferably from about 15 µm to about 20 µm.

The dielectric layer, arranged above the electroluminiscent layer with respect to the substrate may comprise a high-dielectric material, such as barium or strontium titanate, barium-strontium titanate or titania, mixed with a dielectric resin binder, such as a vinylidene copolymer. Preferably barium titanate is used for the preparation of the dielectric layer. The thickness of this layer is generally in the range of from about 1 µm to about 30 µm. Preferably, the thickness is in the range of from about 5 µm to about 25 µm, more preferably from about 15 µm to about 20 µm.

Both, the electroluminescent layer and the dielectric layer may be prepared and layered on the substrate/the layer underneath by means of conventional techniques, well known to the skilled artisan, such as silk-screen-techniques.

On top of the dielectric layer there is provided a back electrode, which may comprise a conductive polymer organic layer, which may be selected from the group consisting of poly-3,4-ethylenedioxythiophene (PEDOT), polyaniline (PANI), or carbazole-based, arylamine-based, perylene-based, pyrrole-based and oxadiazole-based derivatives or similar materials. Preferably the material of the polymer organic layer is PANI. The back electrode is already provided with electrical contacts, in order to apply electric current and to illuminate either the electroluminescent element without having an image on the second side of the substrate or the finished electroluminescent display with an image applied on the second side of the substrate. Preferably, different areas are arranged with a back electrode in that various circuits may be established ensuring a separate and controllable power supply for each of said areas according to the user's need.

The back electrode may be applied in particular patterns on the surface of the dielectric layer. Preparation and constituents of a suitable ink for forming a back electrode are described hereinafter.The ink comprises a base solvent, a humectant, a co-solvent and a conductive material. The constituents are included in certain amounts. In particular, the base solvent is contained in the range of from 10 to 90 % by weight, preferably in the range of from 50 to 90 % by weight and more preferably in the range of from 80 to 90 % by weight. The humectant is contained in the range of from 1 to 20 % by weight, preferably in the range of from 1 to 10 % by weight and more preferably in the range of from 1 to 5 % by weight. The co-solvent is contained in the range of from 1 to 30 % by weight, preferably in the range of from 1 to 15 % by weight and more preferably in the range of from 1 to 10 % by weight. The conductive material is contained in the range of from 0.1 to 20 % by weight, preferably in the range of from 0.1 to 5 % by weight and more preferably in the range of from 1 to 2 % by weight.

The constituents, namely the base solvent, humectant and co-solvent, are used to give the ink the desired properties, such as viscosity and surface tension, in order to prevent the ink from drying out or crusting in the nozzles of an inkjet print head, to aid solubility of the constituents and to facilitate penetration as well adhesion of the ink to a the dielectric layer after printing. The base solvent may be water or any suitable organic solvent, whereas humectant and co-solvent are organic solvents.

Examples of such organic solvents/compounds used in ink compositions may include alcohols, such as methyl alcohol, ethyl alcohol, n-propyl alcohol, isopropyl alcohol, n-butyl alcohol, sec-butyl alcohol, t-butyl alcohol, iso-butyl alcohol, furfuryl alcohol, and tetrahydrofurfuryl alcohol; polyhydric alcohols, such as ethylene glycol, diethylene glycol, triethylene glycol, tetraethylene glycol, propylene glycol, polyethylene glycol, glycerol, 2-methyl-2,4-pentanediol, 1,2,6-hexanetriol, 2-ethyl-2-hydroxymethyl-1,3-propanediol, 1,5-pentanediol, 1,2-hexanediol, and thioglycol; lower mono- and di-alkyl ethers derived from the polyhydric alcohols; nitrogen-containing compounds such as urea, 2-pyrrolidone, N-methyl-2-pyrrolidone, and 1,3-dimethyl-2-imidazolidinone; and sulfur-containing compounds such as 2,2'-thiodiethanol.

The ink for printing of a back electrode may contain a surfactant in the range of from 0.1 to 5 % by weight, preferably in the range of from 0.5 to 2 % by weight and more preferably in the range of from 1 to 1.5 % by weight. Also a binder may be contained in the range of from 0.1 to 10 % by weight, preferably in the range of from 0.5 to 4 % by weight and more preferably in the range of from 1.5 to 2 % by weight.

The ink used for the printing of the second side of the substrate may be any kind of ink, for example a water-based ink, a solvent-based ink or UV-curing ink. In case a water-based ink is used, the second side of the substrate preferably exhibits a certain porosity of the material to ensure adhesion, whereas solvent-based ink or UV-curing ink do not require any particular structure of the surface of the second side of the substrate. The term solvent shall designate any organic solvent, such as ethanol. Preparation, application and curing of such types of ink represent techniques all well known to the person skilled in the art. Preferably, a water-based ink is used.

An advantage of the ink used for printing an image on the second side of the substrate resides in its short curing periods and that it may be easily applied using a conventional ink jet printer. Another advantage of the present invention resides in that the resulting displays may be also produced by a layman user or customer himself, e.g. in home-work. In particular, the customer may purchase the ready to use electroluminescent element provided with an ink reception layer and electrical contacts. The customer merely then has to print the desired image or pattern on the second side of the substrate, for example, his own printer followed by connecting to an electrical source.

In a preferred embodiment of the present invention said substrate is a slide having doted or not-doted indiumtinoxide (ITO) disposed thereon. The material of the slide may be any suitable material known to the skilled person, preferably polyethylene (PE) or polypropylene (PP). The ITO-slide may be prepared according to any technique well known to the skilled person, such as vacuum deposition, sputtering or a sol-gel-technique.

According to a preferred embodiment of the present invention said electroluminescent layer is preferably zinksulfide.

According to another preferred embodiment of the present invention the dielectric layer comprises barium titanate.

According to a particular embodiment, said back electrode is a conductive polymer organic layer, which is preferably selected from the group consisting of poly-3,4-ethylenedioxy-thiophene (PEDOT), polyaniline (PANI), or carbazole-based, arylamine-based, perylene-based, pyrrole-based and oxadiazole-based derivatives or similar materials. More preferably the material of the polymer organic layer is PANI.

According to still another embodiment of the present invention said back electrode provided with electrical contacts and/or said image are provided with a lamination thereon for means of protecting against detrimental environmental influences, such as weather but also scratching.

According to another preferred embodiment the overall thickness of all layers of the electroluminescent element is equal or less than 300µm in that the electroluminescent element may have a shape rendering it suitable for printing with a commercial ink-jet printer, such as DinA4 format. Preferably, the overall thickness of all layers of the electroluminescent element is in the range of from 150 to 300µm and more preferably in the range of from 200 to 250µm.

According to another preferred embodiment of the present invention a method for the preparation of an electroluminescent element is provided, comprising the steps of:
(a) applying an electroluminescent layer on a first side of a substrate;
(b) applying a dielectric layer on said electroluminescent layer;
(c) printing a back electrode on said dielectric layer; and
(d) providing electrical contacts on said back electrode, wherein a second side of said substrate represents an inc reception layer.

According to still another embodiment of the present invention the method comprises after step (c) an additional step (d) of laminating said back electrode provided with electrical contacts.

According to another embodiment of the present invention the method comprises the additional step (e) of printing ink in form of an image on the second side of the substrate.

According to still another embodiment the method comprises the additional step (f) of laminating said second side of the substrate having an image formed thereon.

According to a particular embodiment, the electroluminescent element is prepared by means of silkscreen techniques, i.e. the application of the different layers, back electrode and electrical contacts is performed by screen-printing. The use of the same method for application of all layers, back electrode and electrical contacts provides hereby as another advantage a facilitated production with reduced production costs and less required devices.

### Examples:

A commercially available ITO polyester sheet in DINA4 format as front electrode is coated by screen printing with a homogenous layer of ZnS (purchased by Ormecon, EL5400) (screen 62) and a layer of dielectricum (EL5500) (screen 90). The base layers are dried at 40 to 120°C for 30 min. and are used as carrier for the back electrode. The ink, which acts as back electrode (composite of PANI) is filled in a cartridge of an EPSON Stylus 1200 Inkjet Printer. The back electrode is provided with contacted and laminated yielding an electroluminescent element having an overall thickness of 250µm.

In order to obtain an illuminated electroluminescent display an image was printed with commercial ink on the electroluminescent element by means EPSON Stylus 1200 Inkjet Printer and the respective contacts of the printed circuits were supplied with energy.

In the following the invention will be described with reference to the accompanying drawings in which

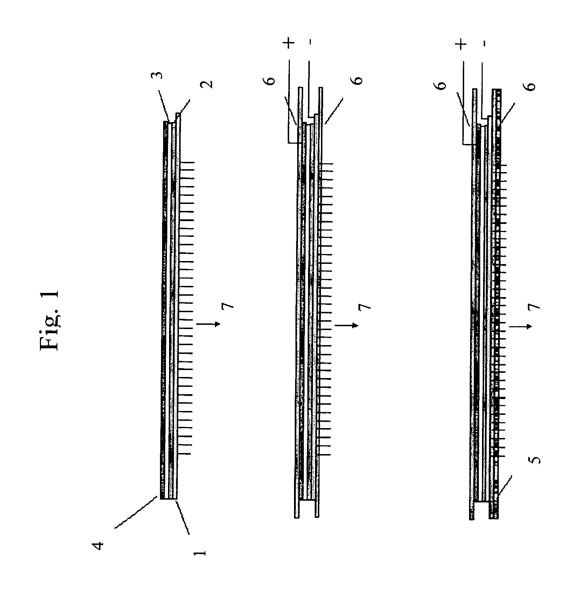

Fig. 1 shows an embodiment of the electroluminescent element according to the invention.

In Fig. 1 the different layers are arranged in the following order : an ITO-slide serves as substrate 1 onto which a ZnS-layer as electroluminescent layer 2 is disposed on its first side. Onto said electroluminescent layer 2 a barium titanate as dielectric layer 3, is applied and a back electrode 4 consisting of polyanilin, above said dielectric layer. The substrate 1, serving as front electrode, and the back electrode are both provided with electrical contacts ready to connect to an electrical source and are further both protected/laminated by means of a thin plastic slide 6. The second side of the substrate represents the ink-reception layer ready 5 for printing an image by means of a commercial ink jet printer thereon. Subsequent printing of the ink-reception layer 5 and drying of the ink, the ink-reception layer 5 is laminated by means of a plastic slide 6. The direction of emitted light is indicated by arrow 7.

## Claims

1. An electroluminescent element, comprising:
(a) a substrate (1) having a first and a second side,
(b) an electroluminescent layer (2) provided on said first side of the substrate (1),
(c) a dielectric layer (3) provided on said electroluminescent layer (2); and
(d) a back electrode (4), which is provided with electrical contacts and which is located on said dielectric layer (3);
**characterized in that** said second side of the substrate represents an ink reception layer on which an image may be applied by means of ink jet printing.

2. The electroluminescent element according to claim 1, wherein said substrate (1) is an ITO-slide.

3. The electroluminescent element according to anyone of the preceding claims, wherein said electroluminescent layer (2) consists of zink sulfide.

4. The electroluminescent element according to any of the preceding claims, wherein said dielectric layer (3) consists of barium titanate.

5. The electroluminescent element according to any of the preceding claims, wherein said back electrode (4) is a polymer organic layer.

6. The electroluminescent element according to any of the preceding claims, wherein said polymer organic layer is selected from the group consisting of PEDOT, PANI, or carbazole-based, arylamine-based, perylene-based, pyrrole-based and oxadiazole-based derivatives or similar materials.

7. The electroluminescent element according to anyone of the preceding claims, wherein said back electrode (4) provided with electrical contacts is laminated.

8. The electroluminescent element according to any of the proceeding claims, wherein said image is laminated.

9. The electroluminescent element according to anyone of the preceding claims, wherein the overall thickness of the electroluminescent element is equal or less than 300µm.

10. A method for the preparation of an electroluminescent element, comprising the steps of:
(a) applying an electroluminescent layer (2) on a first side of a substrate (1);
(b) applying a dielectric layer (3) on said electroluminescent layer (2);
(c) printing a back electrode (4) on said dielectric layer (3); and
(d) providing electrical contacts on said back electrode (4), wherein a second side of the substrate represents an ink reception layer.

11. The method according to any of the claims 10, comprising after step (c) an additional step of laminating said back electrode provided with electrical contacts.

12. The method according to any of the claims 10 to 11, comprising an additional step (e) of printing ink in form of an image on the second side of the substrate.

13. The method according to claim 12, comprising an additional step (f) of laminating said second side of the substrate having an image formed thereon.

14. The method according to claim 10, wherein the electroluminescent element is prepared by means of silkscreen techniques.
